(19) Europäisches Patentamt / European Patent Office / Office européen des brevets

(11) **EP 2 427 830 B1**

(12) **EUROPEAN PATENT SPECIFICATION**

(45) Date of publication and mention of the grant of the patent:
**24.06.2015 Bulletin 2015/26**

(21) Application number: **09789651.8**

(22) Date of filing: **07.05.2009**

(51) Int Cl.:
***G06F 17/30*** *(2006.01)*

(86) International application number:
**PCT/US2009/043174**

(87) International publication number:
**WO 2010/128967 (11.11.2010 Gazette 2010/45)**

(54) **METHOD, SYSTEM, AND APPARATUS FOR SEARCHING AN ELECTRONIC DOCUMENT COLLECTION**

VERFAHREN, SYSTEM UND VORRICHTUNG ZUM DURCHSUCHEN EINER SAMMLUNG ELEKTRONISCHER DOKUMENTE

PROCÉDÉ, SYSTÈME ET APPAREIL DE RECHERCHE D'UN ENSEMBLE DE DOCUMENTS ÉLECTRONIQUES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**14.03.2012 Bulletin 2012/11**

(73) Proprietor: **CPA Software Limited**
**St. Helier, Jersey JE1 1BL (GB)**

(72) Inventors:
 • **RESNICK, Jason, David**
 **Alexandria, VA 22036 (US)**
 • **LACASSE, Randy, W.**
 **Fairfax Station, VA 22039 (US)**

(74) Representative: **Round, Edward Mark et al**
**Marks & Clerk LLP**
**90 Long Acre**
**London WC2E 9RA (GB)**

(56) References cited:
 **GB-A- 2 369 698      US-B1- 7 406 458**

 • **TROTMAN ET AL: "Choosing document structure weights" INFORMATION PROCESSING & MANAGEMENT, vol. 41, no. 2, 1 March 2005 (2005-03-01), pages 243-264, XP025281816 ELSEVIER, BARKING, GB ISSN: 0306-4573 [retrieved on 2005-03-01]**

**Description**

**BACKGROUND OF THE INVENTION**

**Technical Field**

This invention relates to an electronic document collections, and searching the collection in response to receipt of a query. More specifically, the invention relates to creating search profiles by placing an emphasis on each section of an intellectual property document to be searched, and processing the query responsive to selection of at least one of the search profiles.

**Description of the Prior Art**

All intellectual property documents submitted for examination before any of a worldwide selection of patent offices, hereinafter Patent Office, must meet certain requirements, including, each intellectual property document must be deemed new, useful, and non-obvious. To properly prepare an intellectual property document for examination, it is useful to have knowledge of prior intellectual property documents, i.e. prior art, in related areas of technology as only one intellectual property document may be granted per invention. The process of ascertaining prior art is known as a search. The results of the search generally help the drafters of any subsequent intellectual property application to focus their efforts on what appears to be patentable or otherwise protectable subject matter and aids in developing a reasonable strategy for achieving the goals of the inventor or owner of the intellectual property rights.

Prior to the evolution of technology into the current electronic information age, it was known that intellectual property searches were conducted manually. A searcher would review a disclosure and based upon a classification system, ascertain where the disclosure should be classified, and thereafter conduct a search. It was recognized that the searcher would visually review appropriate sections of the intellectual property document based upon the defined scope of the search being conducted. With the advent of information technology, manual searches are no longer available in most jurisdictions as most intellectual property grants and published applications are only available in electronic form. With the advent of the electronic format of the intellectual property document, similar strategies employed with the manual search may be used for searching an electronic intellectual property database.

Different classes of searches may be commissioned to achieve different results. For example, a novelty search may be commissioned to ascertain, whether or not to submit a filing for an intellectual property asset A product clearance search may be commissioned to ascertain whether a produce is covered under the claims of a current intellectual property asset. An invalidity search may be commissioned to determined if the issued claims of the intellectual properly asset are valid, etc. Prior electronic intellectual property document search tools do not support the different classes of searches. Rather, the burden is on the person doing the search, also known as the searcher, to limit the sections of the intellectual property document to be reviewed in the search based upon the scope of the search. As the quantity of graced intellectual property rights and published pending intellectual property applications in the database grow, the burden on the searches increase since more associated documents need to be reviewed for each search.

Accordingly, there is a need for a tool and technique to be used by a searcher to mitigate or avoid the burdens associated with the search and related search scope and to take advantage of the electronic format of the intellectual property documents. The tool should enable the searcher to beverage the different sections of the intellectual property documents during the search to more efficiently and effectively yield accurate and desirable search.

GB2369698 A1 discloses a document searching system enabling weighing of document sections for document retrieval.

**SUMMARY OF THE INVENTION**

This invention composes a method, system, and article for efficiently and effectively searching a collection of patent documents.

According to a first aspect of the present invention, there is provided a method as set out in claim 1. According to a second aspect of the present invention, there is provided a system as set out in claim 8. According to a third aspect of the present invention there is provided an article as set out in claim 15.

Other features and advantages of this invention will become apparent from the following detailed description of the presently preferred embodiment of the invention, taken in conjunction with accompanying drawings.

**BRIEF DESCRIPTION OF THE DRAWINGS**

The drawings referenced herein form a part of the specification. Features shown in the drawing are meant as illustrative of only some embodiments of the invention, and not of mall embodiments of the invention unless otherwise explicitly indicated. Implications to the contrary are otherwise not to be made.

FIG. 1 is a flowchart illustrating a process for identifying sections of a patent document for creation of one or more profiles

FIG. 2 is a flow chart illustrating a process for creating a secondary weight for one or more profiles.

FIG. 3 is a flow chart illustrating a process for employing the secondary weight to reflect the location within each profile sections in which the string match occurs.

FIG. 4 is a block diagram of a user interface to support creation of a profile.

FIG. 5 is a flow chart illustrating a process for submitting a query to a compiled and indexed document collection, according to the preferred embodiment of this invention, and is suggested for printing on the first page of the issued patent.

FIG. 6 is a block diagram illustrating a set of tools employed to create a search profile and to assign one or more weights to different sections of the underlying document collection as identified in the profile.

## DESCRIPTION OF THE PREFERRED EMBODIMENT

It will be readily understood that the components of the present invention, as generally described and illustrated in the Figures herein, may be arranged and designed in a wide variety of different configurations, Thus, the following detailed description of the embodiments of the apparatus, system, and method of the present invention, as presented in the Figures, is not intended to limit the scope of the invention, as claimed, but is merely representative of selected embodiments of the invention.

The functional units described in this specification have been labeled as managers and directors. A manager and/or director may be implemented in programmable hardware devices such as field programmable gate arrays, programmable array logic, programmable logic devices, or the like. The manager and/or director may also be implemented in software for execution by various types of processors. An identified manager and/or director of executable code may, for instance, comprise one or more physical or logical blocks of computer instructions which may, for instance, be organized as an object, procedure, function, or other construct. Nevertheless, the executables of an identifies manager and/or director need not be physically located together, but may comprise disparate instructions stored in different locations which, when joined logically together, comprise the manager and/or director and achieve the stated purpose of the manager and/or director.

Indeed, a manager and/or director of executable code could be a single instruction, or many instructions, and may even be distributed over several different code segments, among different applications, and across several memory devices. Similarly, operational data may be identified and illustrated herein within the manager and/or director, and may be embodied in any suitable form and organized within any suitable type of data structure. The operational data may be collected as a single data set, or may be distributed over different locations including over different storage devices, and may exist, at least partially, as electronic signals on a system or network.

Reference throughout this specification to "a select embodiment," "one embodiment." or "an embodiment" means that a particular feature, structure, or characteristic described in connection with the embodiment is included in at least one embodiment of the present invention Thus, appearances of the phrases "a select embodiment," "in one embodiment," or "in an embodiment" in various places throughout this specification are not necessarily referring to the same embodiment.

Furthermore, the described features, structures, or characteristics may be combined in any suitable manner in one or more embodiments. In the following description, numerous specific details are provided, to provide a thorough understanding of embodiments of the invention. One skilled in the relevant art will recognize, however, that the invention can be practiced without one or more of the specific details, or with other methods, components, materials, etc, In other instances, well-known structures, materials, or operations are not shown or described in detail to avoid obscuring aspects of the invention.

The illustrated embodiments of the invention will be best understood by reference to the drawings, wherein like parts are designated by like numerals throughout. The following description is intended only by way of example, and simply illustrates certain selected embodiments of devices, systems, and processes that are consistent with the invention as claimed herein.

### Overview

An intellectual property document collection is a compilation of issued and published applications. A patent document collection is a subset of the intellectual property document collection. Patent documents come in the form of issued patent grants and published patent applications. The difference between the two categories of documents identifies their enforceable value. More specifically, a patent grant is an actual property right that can be enforced in a court of law, whereas a published patent application is a pending application that is a pending patent right. Each patent document is parsed into multiple sections, with each section containing written words and phrases, also known as string data. To accommodate searching of the collection, each document in the collection is parsed based upon sections within each document, and a weight is assigned to each of the parsed sections of the intellectual property documents. The weight is a numerical measure of emphasis to be placed on one or more specific sections of the document for the query. A selection of document sections together with weights assigned to the selected sections creates a search profile Depending upon the scope of the search, the search may be limited to specific sections of the documents, or different emphasis may be placed on matching query data in each section of the document. Accordingly, the creation and selection of a search profile is directly related to the search results.

Prior to submission of a query string to the document collection, at least one search profile is selected based upon the intended scope of the search. A compilation of matching documents are returned based upon matching data between the query string data and the document string data in each section of the patent document having an assigned weight as indicated in the selected profile. Accordingly, weights are assigned to one or more sections of a patent document in a patent document collection to efficiently and effectively create a result set with data pertinent to the query submitted to the collection, wherein the result set includes one or more documents in the patent document collections with a string matching the submitted query string in a section assigned a weight value in excess of zero.

**Technical Details**

In the following description of the embodiments, reference is made to the accompanying drawing that form a part hereof, and which shows by way of illustration the specific embodiment in which the invention may be practiced. It is to be understood that other embodiments may be utilized because structural changes may be made without departing form the scope of the present invention.

It is recognized that documents describing issued and published intellectual property documents are divided into multiple sections. Each section is required for a submission of a completed application, and each section has a purpose The details of each section of the underlying intellectual property are not going to be discussed herein. However, for purposes of disclosure, the different sections of a patent, as an example of an intellectual property document, will be identified. For the most part, each patent application includes a title, a priority filing date, an abstract, a background description, a summary, a brief description of the drawing figures (if any), drawing figures (if any), a detailed description of the invention, and claims. There are different search categories that are employed in the patent arena depending upon the purpose of the search. For example, an infringement and/or product clearance search is concerned with the language in the claims, and therefore should be essentially directed to the claims present in the document collection. A validity and/or invalidity search is concerned with any known prior art, and requires identification of the priority filing date of the patent document. When an inventor(s) seeks to determine the novelty of their invention prior to or following submission of a patent application, the inventors or his/her agent or representative may commission a novelty search. Such a search may de-emphasize the claims and focus on the detailed description of the invention. Accordingly, as shown herein, each search places emphasis on different sections of a patent document in the document collection.

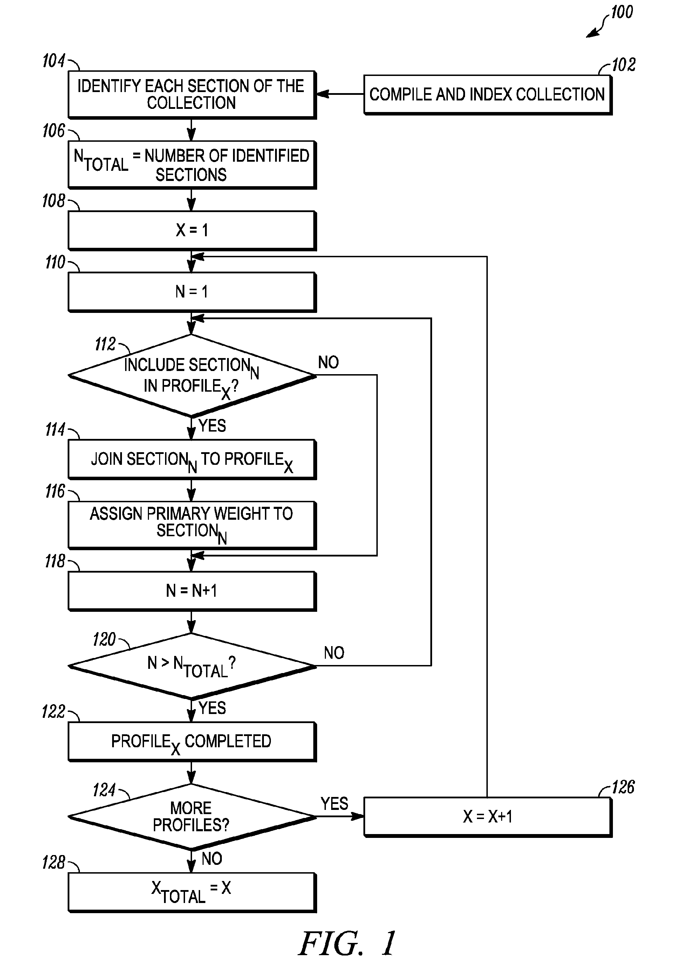

Fig. 1 is a flow chart (100) illustrating a process for identifying sections of a patent document for creation of one or more profiles. Under current rules of practice, each patent document submitted to the U.S. Patent and Trademark Office will contain the following sections: title, background - including the technical field and a description of the prior art, summary of the invention, brief description of the drawing figures, drawing figures, detail description of the preferred embodiment), claims, and abstract. In one embodiment, not all patent documents will contain drawing figures, such as in chemical practice and some international patents and patent documents. Simmilarly, in other countries and regional offices and in prior domestic practice, there may be a different quantity of sections in a patent document, or the sections may be presented in a different order. Accordingly, prior to placing an emphasis on one or more sections of a patent document in the collection with a query, the origin of the documents, the different sections of the documents, and the order in which the sections are organized in the collection need to be identified.

Initially, a collection of patent documents is compiled and indexed (102). It is recognized in the art that patents and patent publications are comprised of multiple sections. Following the compilation of the documents, each section in each patent in the collection of documents is identified (104). The variable $N_{Total}$ is assigned to the number of sections in the patent document (106). Different profiles are created to address different searching needs. A profile is created by placing an emphasis on different combinations of sections of the patent documents, and/or by omitting one or more sections of the document from consideration during the search itself by assigning a value of zero to that section. To support profile based searching, at least one profile is created. However, in one embodiment, there are multiple profiles created to support selection of a profile to meet the needs of the search. Once the sections of the patent documents are identified at step (106), a counting variable X associated with the profile designation is initialized and assigned to the integer one (108) and the counting variable N pertaining to the sections of the patent document is assigned to the integer one (110). Starting with section$_N$ of the patent document collection, it is determined if section$_N$ will be employed as part of the profile being created, profile$_X$ (112). A positive response to the determination at step (112) joins section$_N$ to profile$_X$(114). With the selection of section$_N$, a primary weight is assigned to section$_N$ (116). The primary weight is a numerical value that signifies the of importance of section$_N$ to profile$_X$ with respect to other sections of the patent document collection, including any previously selected sections and other sections to be joined or omitted from the profile. Following step (116) or a negative response to the determination at step (112), the variable, N associated with the sections of the patent documents is incremented (118). It is then determined if all of the identified sections of the patent documents in the compiled and indexed collection have been evaluated for joining or omitting from profile (120). A positive response to the determination at step (120) concludes the profile creation process for profile$_X$ (122). Conversely, a negative response to the determination at step (120) is followed by a return to step (112) for consideration of additional sections in the collection for profile$_X$. It is then determined if there are any additional profiles to create for the document collection (124). A positive response to the determination at step (124) is followed by an increment of the counting variable X (126) and a return to step (110). Conversely, a negative response to the determination at step (124) concludes the creation of the profiles with assignment of the number associated with X to the variable X$_{Total}$ (128). Accordingly, one or more profiles may be created for a patent document collection, with each profile placing an emphasis on one or more identified sections in the patent document collection.

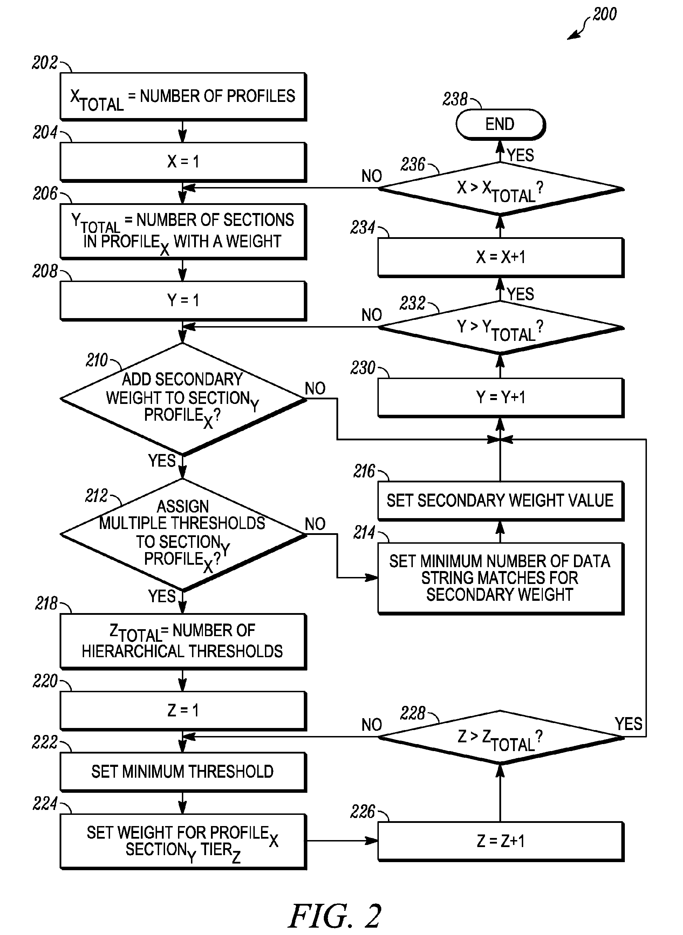

As demonstrated in Fig. 1, one or more profiles may be created to emphasize or de-emphasixe employment of select sections of the patent documents during the search process. Fig. 2 is a flow chart (200) demonstrating an added dimension of emphasis that may be added to each created profile. More specifically, an added weight in the form of a secondary weight may be employed to either add or subtract from the weight score based upon a quantity of matching strings in select sections of each profile. The variable X$_{Total}$ is assigned to represent the quantity of profiles created (202), as demonstrated in Fig. 1, and a counting variable X is assigned to the integer one (204). Thereafter, the variable Y$_{Total}$ is assigned to represent the quantity of sections in profile$_X$ with a weight assignment (206), as demonstrated in Fig. 1. To assess the individual sections of a profile, a counting variable Y is assigned to the integer one (208). It is then determined if a secondary weight will be added to section$_Y$ of profile$_X$ (210). A negative response to the determination at step (210) is followed by a jump to step (230) to evaluate the next section in the profile, if any. Conversely, a positive response to the determination at step (210) is followed by a second query to determine if the secondary weight assignment will be a tiered structure (212). More specifically, each profile may include a hierarchy of weight values depending upon a quantity of data string matches returned during the search process with the selected profile. A negative response to the determination at step (212) is followed by setting the minimum threshold of data string matches that must be returned in order to employ a secondary weight assignment to section$_Y$ (214). Following step (214), the secondary weight value is set for profile$_X$section$_Y$ (216). The input at steps (214) and (216) is to set the parameters satisfying the secondary weight structure as established at step (212). Accordingly, for each profile section, a secondary weight value may be set to provide emphasis on the search results when a threshold value of matches has been exceeded.

In addition to setting a single secondary weight value, each select section of a profile may be configured to accommodate a hierarchy of secondary weight threshold values. Following a positive response to the determination at step (212), the variable Z$_{Total}$ is assigned to the quantity of hierarchical thresholds to be assigned to proofile$_X$, section$_Y$ (218), and a tier counting variable Z is set to the integer one (220). Following step (220), the minimum threshold of data string matches that must be returned in order to employ a secondary weight assignment to profile$_X$, section$_Y$, tier$_Z$ is set (222), and the secondary weight value is set for profile$_W$section$_Y$ tier$_Z$ (224). Once the weight value is set for the select tTier$_Z$, the tier counting variable Z is incremented (226), follower by a determination as to whether all the weight values have been set for all of the tiers for profile$_X$, sectiony (228). A negative response to the determination at step (228) is followed by a return to step (222). Conversely, a positive response to the determination at step (228) or following step (216) is followed by an increment of the counting variable Y to proceed to evaluation of the next section of the select profile (230). It is then determined if all of the sections of the select profile have been evaluated for assignment of a hierarchy of secondary weight threshold values (232). A negative response to the determination at step (232) is followed by a return to step (210), and a positive response to the determination at step (232) is followed by an increment of the profile counting variable X (234). Following step (234), it is determined if all of the created profiles have been evaluated for assignment of a secondary weight (236). A negative response to the determination at step (236) is followed by a return to step (206), and a positive response to the determination at step (236) concludes the assignment of a hierarchy of secondary weight threshold values to select sections of created profiles (238). Accordingly, each profile may be configured with a hierarchy of secondary weights to place emphasis on both the select sections of each profile as well as the quantity of matching strings within a profile.

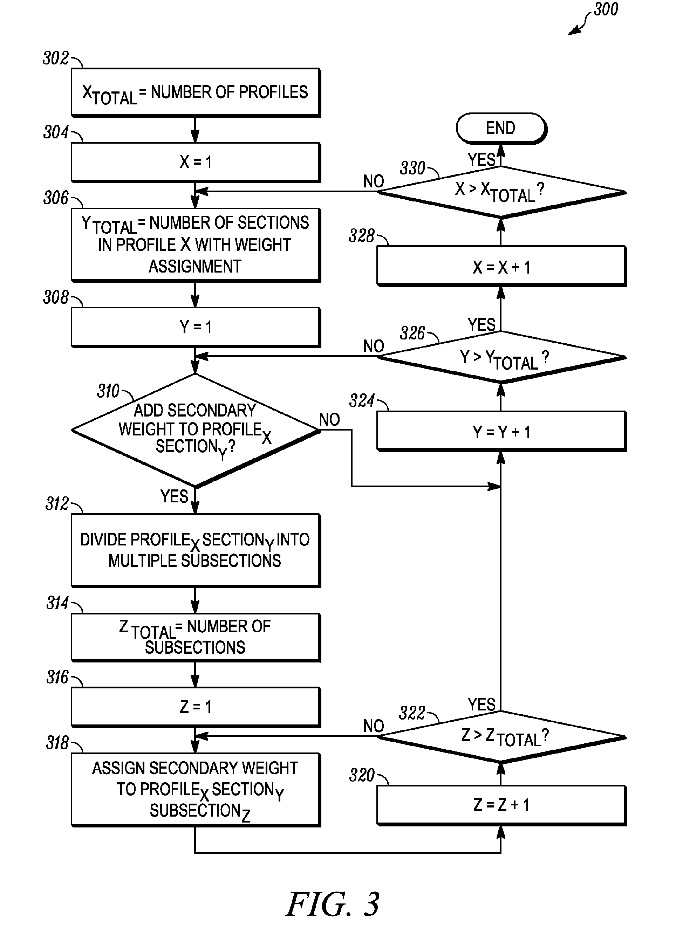

As shown in Fig. 2, a hierarchy of secondary weights, i.e. tiers, may be applied to each individual section of a profile, with the secondary weights based upon one or more threshold values for the quantity of matches between the query string and the data in the document collection being parsed. In another embodiment, the secondary weight may reflect the locations within one or more profile sections in which the string match occurs, as demonstrated in Fig. 3. This secondary weight may be separate from or supplemental to the secondary weight demonstrated in Fig. 2. The variable

$X_{Total}$ is assigned to represent the quantity of profiles created (302), as demonstrated in Fig. 1, and a counting variable X is assigned to the integer one (304) Thereafter, the variable $Y_{Total}$ is assigned to represent the quantity of sections in profile$_X$ with a weight assignment (306), and a counting variable Y is assigned to the integer once (308). It is then determined if a secondary weight will be added to profile$_X$, section$_Y$ (310). A positive response to the determination at step (310) is followed by dividing profile$_X$, section$_Y$ into multiple subsections (312). There are different embodiments that may be employed for the division at step (312). For example, in one embodiment, there may be three subsections with a first subsection being limited to the first sentence, a third subsection being limited to the last sentence, and a second subsection being limited to all data located between the first and third subsections. Similarly, in another embodiment, profile$_X$, section$_Y$ may be divided into multiple sections, with each section length pertaining to a percentage of the profile$_X$, section$_Y$ as a whole. Regardless of the method employed for determining the quantity of subsections, each profile$_X$, section$_Y$ may be divided into two or more subsections with a secondary weight assigned to reflect a matching string not only in profile$_X$, section$_Y$ but also the location of the match in the select subsection.

Following step (312), the variable $Z_{Total}$ is assigned to the quantity of subsections created for profile$_X$, section$_Y$ (314), and a counting variable Z is assigned to the integer one (316). A secondary weight is assigned to profile$_X$, section$_Y$, subsection$_Z$ (318). Following the assignment at step (318), the counting variable Z is incremented (320), followed by a determination as to whether there are any more subsections in profile$_X$, section$_Y$, that have not been evaluated for a secondary weight assignment (322). A negative response to the determination at step (322) is followed by a return to step (318). Conversely, a positive response to the determination at step (322) or a negative response to the determination at steep (310) is followed by an increment of the counting variable Y (324). It is then determined if there are any sections in profilex that have not been evaluated for assignment of a secondary weight (326). A negative response to the determination at step (326) is following by a return to step (310). Conversely, a positive response to the determination at step (326) is followed by an increment of the counting variable X (328), and a determination as to whether all of the profiles have been evaluated for a secondary weight assignment (330). A negative response to the determination at step (330) is followed by a return to step (306), and a positive response concludes the secondary weight assignment process. Accordingly, a profile section may be subdivided into multiple subsections based upon their physical location, with a secondary weight assigned to one or more of the identified subsections.

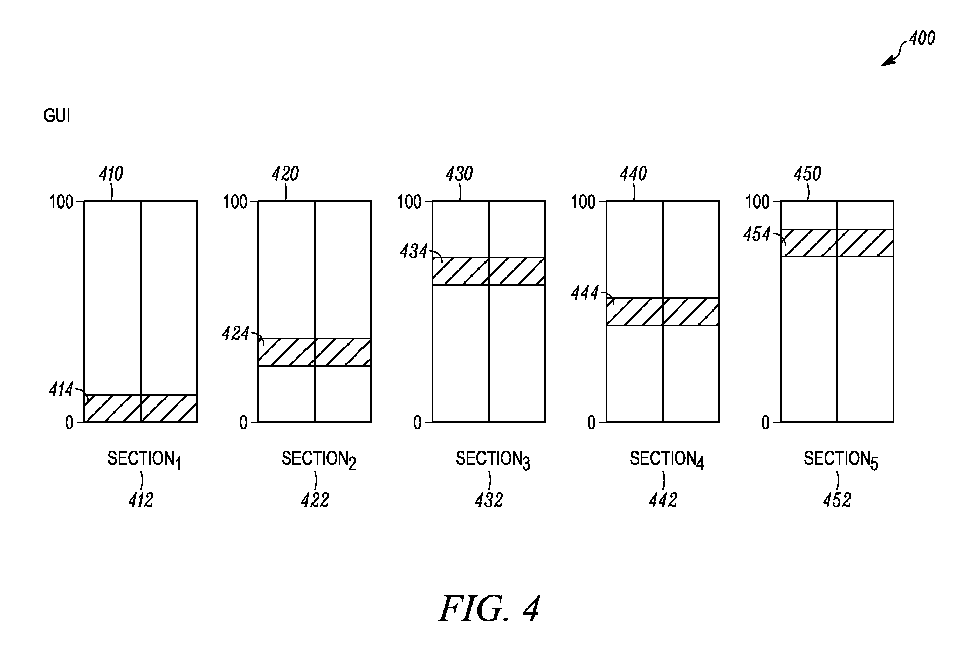

Fig. 4 is a block diagram (400) of a user interface to support creation of a profile for a search to be submitted to an intellectual property document collection. The user interface functions as a veneer to the underlying code for application of weights to sections of the underlying documents. As shown, there are multiple blocks presented within the interface, with each box associated with a section identified in the document collection. More specifically, in the example shown herein there are five boxes (410), (420), (430), (440), and (450), with each box having indicia identifying the respective sections of the underlying documents in the collection. The first box (410) is associated with a first section present in the documents (412), the second box (420) is associated with a second section present in the patent documents (422), the third box (430) is associated with a third section present in the patent documents (432), the fourth box (440) is associated with a fourth section present in the patent documents (442), and the fifth box (450) is associated with a fifth section present in the patent documents. Although the interface represented herein only shows the underlying documents in the collection divided into five sections, the invention should not be limited to this quantity. In one embodiment, the document collection may be parsed into a larger quantity or a smaller quantity of sections, with each section represented in the interface (400).

For each section of the underlying document identified in the interface for parsing, a slide mechanism is provided to raise or lower the weight to be allocated to the associated section. As such, the first box (410) is provided with a slide (414), the second box (420) is provided with a slide (424), the third box (430) is provided with a slide (434), the fourth box (440) is provided with a slide (444), and the fifth box (450) is provided with a slide (454). In one embodiment, each box (410) - (450) is scaled with a position of the slide indicating the weight to be applied to a match of the query with data present in the specified section of the documents. Although the numerical indicia of the weights are not shown herein, in one embodiment, the numerical indicia may be provided on a vertical axis of each box (410) - (450), As the individual slide of each box is raised, the weight of the associated section is increased. Similarly, as the individual slide of each box is lowered, the weight of the associated section is decreased. Accordingly, the interface provides a graphical tool to support the allocation of weights to different sections of the intellectual property documents for creation of a profile.

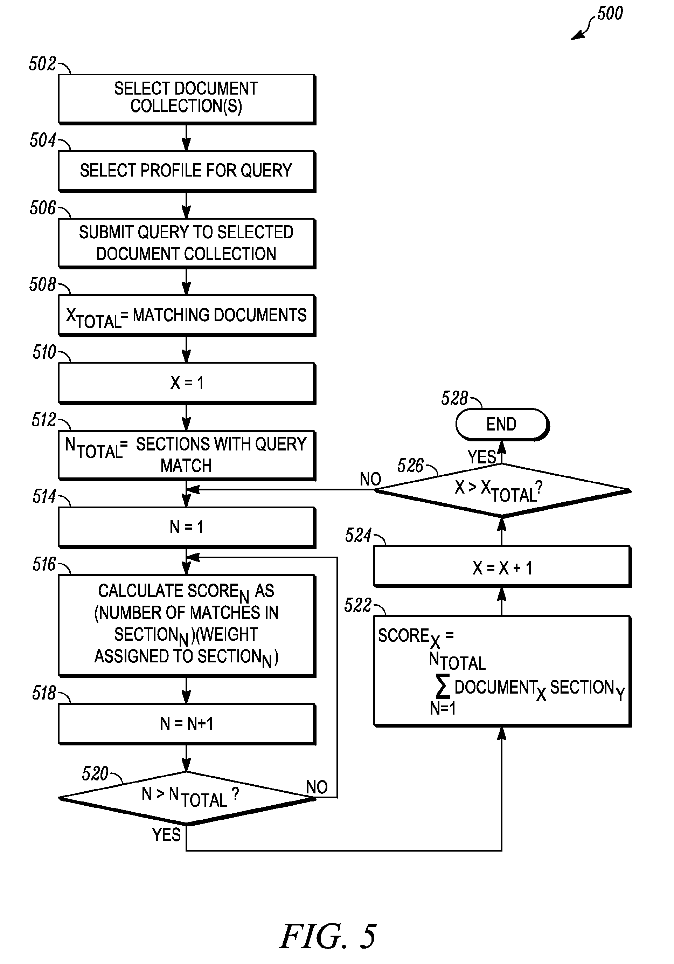

Once the profiles have been created and the primary and/or secondary weights have been assigned to the different sections and subsections as identified in the profile, the profiles may be employed to create a compilation of relevant documents from a document query. Fig. 5 is a flow chart (500) illustrating a process for submitting a query to a compiled and indexed document collection. Initially, one or more document collections are selected to receive the query (502), together with a profile for the query submission (504). It is understood that a properly selected profile will reflect the intended scope of the document query submission. In other words, a search limited to the claims should reflect a profile that substantially limits the document collection to the claims section. Accordingly, a search that does not intend to review the document sections in their entirety should include selection of an appropriately categorized profile. Once steps (502) and (504) are complete, the searcher provides the query and submits it to the document collection (506).

The variable $X_{Total}$ is assigned to the quantity of documents that are determined to match with data submitted in the query (508), and an associated counting variable, X, is assigned to the integer one (510). Similarly, the variable $N_{Total}$ is assigned to the quantity of sections identified in the selected profile with at least one occurrence of the query input (512), and an associated counting variable, N is assigned to the integer one (514). A score is calculated for $document_X$, $section_N$ (516) based upon the following mathematical formula:

$$document_X, section_N = (number\ of\ matches\ in\ section\ N)\ (weight\ assigned\ to\ section\ N)$$

Following step (516), the variable N is incremented (518) followed by a determination as to whether all of the sections in the profile have been evaluated for document X (520). A negative response to the determination at step (520) is followed by a return to step (516). Conversely, a positive response to the determination at step (520) is followed by aggregating a score for document X as the summation of the weighted score value of $document_X$, $section_N$ for each of the sections in the document (522). This aggregation is compiled for each patent document in the collection that has a match with the query input. Following step (522), the variable X is incremented (524), followed by a determination of whether a weight has been calculated for all of the documents with a match (526). A negative response to the determination at step (526) is followed by a return to step (514). Conversely, a positive response to the determination at step (526) is an indication that the weight has been calculated and assigned to each document in the collection based upon the selected profile (528). Accordingly, a compilation of documents is returned with an attached weight that reflects the relevancy of the document based upon the profile employed in the search.

The compilation returned in Fig. 5 is based upon a query submitted to a document collection with the employment of a selected query. In one embodiment, the query selection may be dynamically modified. Following the return of the document collection the profile may be adjusted, with the query re-submitted to the selected document collection. By selecting a different profile, the search results in the form of the returned compilation of documents may be different. Similarly, in one embodiment, the profile may be dynamically adjusted through the graphical user interface shown in Fig. 4 to solicit a different compilation of documents for the same search query. Accordingly, the same search query may be submitted to the document collection with a dynamic modification of the query profile to solicit a return of a different compilation of returned documents.

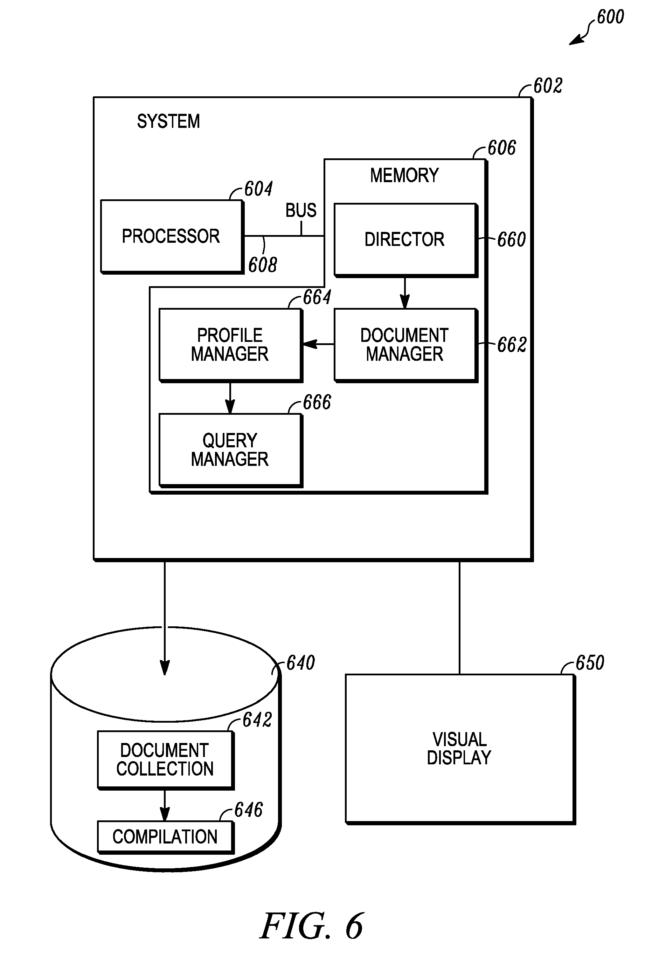

As demonstrated above, each patent in the document collection may be parsed to a emphasize or de-emphasize the value of data matches in specified sections of a returned compilation of intellectual property documents. Fig. 6 is a block diagram (600) illustrating a set of tools for creation of search profiles and assignment of weights to different sections of the intellectual property documents identified in the search profile. As shown, a computer system (602) is provided with a processor unit (604) coupled to memory (606) by a bus structure (608). Although only one processor unit (604) is shown, in one embodiment, more processor units may be provided in an expanded design. The system (602) is shown in communication with storage media (640) configured to house a document collection (642). In one embodiment, the electronic document collection includes a compilation of patent documents, including issued patents and published patent applications. The storage media (640) is in communication with the processor unit (604). In addition, the system is shown in communication with a visual display (650) for presentation of visual data. Each of the elements shown and described herein support query submission to the document collection (642).

A director (660) is provided local to the computer system (602) and in communication with memory (606). The director (660) is responsible for compiling and indexing the document collection (642). The director (660) is in communication with a document manager (662) which identifies each section of each document in the collection As explained above, in the case of a patent document collection, each patent or published patent application is comprised of specific uniform sections. However, not all patent document collections have a uniform layout. As such, the document manager (662) is employed to identify the sections of the documents in the collection, and in one embodiment, the order of the presentation of the identified sections. A profile manager (664) is provided in communication with the document manager (662), The profile manager (664) organizes a search profile for the document collection (642). More specifically, the profile manager (664) facilitates the selection of one or more sections of the documents, as identified by the document manager (662) for inclusion in a query, and assigns a weight to each selected section. In one embodiment, the weight is a numerical value to identify the importance of matching data in the selected section(s). Accordingly, the search profile as organized by the profile manager (664) provides an outline for the sections of the document collection that are pertinent to the query.

A query manager (666) is in communication with the profile manager (664), also provided local to the computer system (602) and in communication with memory (606). The query manager (664) is responsible for selection of at least one search profile with submission of a query to the document collection (642). More specifically, the query manager (666) compares query data with data in the sections of the document collection (642) that are identified in the profile and assigned a weight. The comparison as performed by the query manager (666) yields a compilation of relevant patent documents (646). In one embodiment, the compilation is presented on the visual display (650). Similarly, in one embodiment, the compilation may be retained on storage, either volatile or persistent.

In one embodiment, the director (660), document manager (662), profile manager (664), and query manager (666), may reside in memory (606) local to the computer system (602). However, the invention is not be limited to this embodiment. For example, in one embodiment, the director, document manager, profile manager, and query manager (660) - (666) may each reside as hardware tools external to local memory (606), or they may be implemented as a combination of hardware and software. Similarly, in one embodiment, the director and managers (660) - (666), may reside on a remote system in communication with the storage media (640). Accordingly, the director and managers may be implemented as a software tool or a hardware tool to support submission of one or more queries to an electronic patent document collection to yield a compilation of relevant patent documents.

In one embodiment, the invention is implemented in software, which includes but is not limited to firmware, resident software, microcode, etc. The invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

Embodiments within the scope of the present invention also include articles of manufacture comprising program storage means having encoded therein program code. Such program storage means can be any available media which can be accessed by a general purpose or special purpose computer. By way of example, and not limitation, such program storage means can include RAM, ROM, EEPROM, CD-ROM, or other optical disk storage, magnetic disk storage or other magnetic storage devices, or any other medium which can be used to store the desired program code means and which can be accessed by a general purpose or special purpose computer Combinations of the above should also be included in the scope of the program storage means.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, random access memory (RAM), read-only memory (ROM), a rigid magnetic disk, and an optical disk. Current examples of optical disks include compact disk B read only (CD-ROM), compact disk B read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks.

The software implementation can take the form of a computer program product accessible from a computer-useable or computer-readable medium providing program code for use by or in connection with a computer or any instruction execution system.

**Advantages Over the Prior Art**

Each intellectual property document is known in the art to have a defined outline of sections that are required to meet statutory filing requirements. One or more profiles are created to facilitate submission of a query to the document collection. Each profile imparts a weight to one or more of the identified sections in the document. The weight represents the importance of the identified section and adds value to each document in the returned compilation. Not all queries are the same. For example, it is recognized that intellectual property documents in the chemical technologies have a limited number of drawing figures, if any. As such, a query in the chemical technology may de-emphasize the drawing figures, and place a greater emphasis on the written text. Different queries are submitted to the collection to achieve different results. Accordingly, the creation of multiple profiles, with each profile employing a different selection of the identified sections, and imparting different weights to the different selected sections, enables a query submission to be efficiently and effectively processed to yield a focused compilation of document results.

**Alternative** Examples

It will be appreciated that, although specific embodiments of the invention have been described herein for purposes of illustration, various modifications may be made without departing from the scope of the invention. In particular, there are different forms of intellectual property documents, including patents, trademarks, and copyrights. Within the category of patent documents, there is a further breakdown of documents, including issued patents, published patent application, patent abstracts, and utility model registrations. Some of these documents may contain the same quantity of sections in the same order, and others will have a different quantity of sections and/or a different order. The profiles are independently created based upon sections that are present, and not necessarily the order in which they appear in the underlying document.

In addition, the electronic document collection has been specifically described pertaining to intellectual property documents, including issued patents and published patent applications, trademark registrations and application, and copyright registrations and applications. However, the invention should not be limited to these specific categories of electronic documents. In one embodiment, the electronic document collection may include any type of document that has a defined plurality of sections. This would enable the managers to parse the documents into the defined sections, create multiple profiles with associated weights for one or more of the defined sections, and submission of a query to the document collection with a selected profile. As noted above, selection of a query profile may be dynamically modified. In one embodiment, modification of the query profile while maintaining the query content may change the documents returned in the compilation as well as the order in which the documents in the compilation are presented. Accordingly, the scope of protection of this invention is limited only by the following claims and their equivalents.

**Claims**

1.  A computer implemented method for searching on an electronic document collection comprising:

    compiling and indexing (102) a collection of intellectual property documents, each of the documents in the collection having multiple sections;
    identifying (104) each of the sections of each document in the collection;
    organizing a search profile for the document collection, wherein the search profile includes a selection of at least one of the identified sections of each document in the compiled collection;
    within the organized search profile, assigning a weight (116) to each of the identified and selected sections;
    at query time, submitting a query (506) to the intellectual property document collection, including selecting at least one search profile, and comparing query data with data in each of the document sections of the selected profile in the coiiection with an assigned weight,
    generating a compilation of relevant documents generated from said query submission, including a match of the submitted query to data in at least one identified profile section having an assigned weight,
    **characterised by**
    modifying one or more weights by adding or subtracting one or more secondary weights from each assigned weight based upon a quantity of matching strings in select sections exceeding a threshold value.

2.  The method of claim 1, further comprising subdividing at least one identified section in a search profile to at least two subsections and assigning a secondary weight to at least one of the two subsections.

3.  The method of claim 1, further comprising calculating a score for each document in the compilation of relevant documents, wherein the score is an aggregation of a product of the quantity of matches in each profile section of the selected profile with the weight assigned for that section.

4.  The method of claim 1, further comprising dynamically modifying the assigned weight to at least one identified section of each intellectual property document in the collection.

5.  The method of claim 4, further comprising employing a graphical user interface as layer for modifying the assigned weights, wherein the graphical user interface includes a field for each identified section of each intellectual property document a corresponding slide bar for each identified section.

6.  The method of claim 1, wherein the assigned weights are static.

7.  The method of claim 1, further comprising pre-programming weight profiles for the identified sections of the collection of patent documents based upon a scope of the query to be submitted to the document collection.

8.  A system comprising:

a processor in communication with memory and storage media;

a collection of intellectual property documents (602) retained on the storage media, with each of the documents in the collection having multiple sections;

a director (660) to compile and index the collection of documents;

a document manager (662) in communication with the director, the document manager to identify each section of each document in the collection;

a profile manager, (664) in communication with the document manager, the profile manager being configured to organize a search profile for the document collection, wherein the search profile includes a selection of at least one of the identified sections of each document in the compiled collection;

the profile manager being configured to assign a weight to each of the identified and selected section with the organized search profile, and at query time, a query manager to submit a query to the document collection, the query to include selection of at least one search profile and comparison of query data with data in each of the document sections of the selected profile in the collection having an assigned weight ; and

a visual display configured to display a compilation of relevant documents generated from said query submission and returned from the query manager, with each document having a match of the query to data in at least one identified profile section having an assigned weight;

**characterised by**

the profile manager being configured to modify one or more assigned weights by adding or subtracting one or more secondary weights from each assigned weight based upon a quantity of matching strings in select sections exceeding a threshold value.

9. The system of claim 8, further comprising the profile manager to subdivide at least one identified section in at least one search profile to at least two subsections, and to assign a secondary weight to at least one of the two subsections.

10. The system of claim 8, further comprising the query manager to calculate a score for each document in the compilation of relevant documents, wherein the score is an aggregation of a product of the quantity of matches in each profile section of the selected profile with the weight assigned for that section.

11. The system of claim 8, further comprising the profile manager to support dynamic modification of the assigned weight to at least one identified section of each intellectual property document in the collection.

12. The system of claim 11, further comprising a graphical user interface as layer to modify the assigned weights, wherein the graphical user interface includes a field for each identified section of each intellectual property document and a corresponding slide bar for each identified section.

13. The system of claim 8, wherein the assigned weights are static.

14. The system of claim 8 further comprising pre-programmed weight profiles for the identified sections of the collection of patent documents based upon a scope of the query to he submitted to the document collection.

15. An article configured to search an electronic document collection on computer memory, the article comprising a computer-readable carrier including computer program instructions executable by a computer to cause the computer to carry out a method according to any one of claims 1 to 7.

**Patentansprüche**

1. Computerimplementiertes Verfahren zum Durchsuchen einer Sammlung elektronischer Dokumente, Folgendes umfassend:

Kompilieren und Indexieren (102) einer Sammlung von Dokumenten geistigen Eigentums, wobei jedes der Dokumente in der Sammlung mehrfache Abschnitte hat;

Identifizieren (104) eines jeden der Abschnitte eines jeden Dokuments in der Sammlung;

Organisieren eines Suchprofils für die Dokumentensammlung, worin das Suchprofil eine Auswahl von mindestens einem der identifizierten Abschnitte eines jeden Dokuments in der kompilierten Sammlung einschließt;

innerhalb des organisierten Suchprofils das Zuweisen eines Gewichts (116) an jeden der identifizierten und ausgewählten Abschnitte;

zur Abfragezeit das Einreichen einer Abfrage (506) an die Sammlung von Dokumenten geistigen Eigentums, einschließlich des Auswählens von mindestens einem Suchprofil, und das Vergleichen von Abfragedaten mit Daten in jedem der Dokumentenabschnitte des ausgewählten Profils in der Sammlung mit einem zugewiesenen Gewicht,

Erzeugen einer Kompilation von relevanten Dokumenten, die aus der Abfragevorlegung erzeugt werden, einschließlich einer Übereinstimmung der vorgelegten Abfrage mit Daten in mindestens einem identifizierten Profilabschnitt mit einem zugewiesenen Gewicht,
**gekennzeichnet durch**:

Modifizieren von einem oder mehreren Gewichten **durch** Addieren oder Subtrahieren von einem oder mehreren sekundären Gewichten von jedem zugewiesenen Gewicht auf der Basis einer Anzahl von übereinstimmenden Strings in Auswahlabschnitten, die einen Schwellenwert übersteigt.

2. Verfahren nach Anspruch 1, außerdem umfassend, dass mindestens ein identifizierter Abschnitt in einem Suchprofil in mindestens zwei Unterabschnitte unterteilt wird und ein sekundäres Gewicht mindestens einem der zwei Unterabschnitte zugewiesen wird.

3. Verfahren nach Anspruch 1, außerdem das Berechnen eines Scores für jedes Dokument in der Kompilation von relevanten Dokumenten umfassend, worin der Score eine Aggregation eines Produkts der Anzahl von Übereinstimmungen in jedem Profilabschnitt des ausgewählten Profils mit dem für diesen Abschnitt zugewiesenen Gewicht ist.

4. Verfahren nach Anspruch 1, außerdem das dynamische Modifizieren des mindestens einem identifizierten Abschnitt eines jeden Dokuments geistigen Eigentums in der Sammlung zugewiesenen Gewichts umfassend.

5. Verfahren nach Anspruch 4, außerdem umfassend, dass eine graphische Benutzeroberfläche als Schicht zum Modifizieren der zugewiesenen Gewichte eingesetzt wird, worin die graphische Benutzeroberfläche ein Feld für jeden identifizierten Abschnitt eines jeden Dokuments geistigen Eigentums, eine entsprechende Bildlaufleiste für jeden identifizierten Abschnitt einschließt.

6. Verfahren nach Anspruch 1, worin die zugewiesenen Gewichte statisch sind.

7. Verfahren nach Anspruch 1, außerdem vorprogrammierte Gewichtsprofile für die identifizierten Abschnitte der Sammlung von Patentdokumenten auf der Basis eines Umfangs der Abfrage umfassend, die der Dokumentensammlung vorzulegen ist.

8. System, Folgendes umfassend:

einen Prozessor in Kommunikation mit einem Speicher und Speichermedia;
eine Sammlung von Dokumenten geistigen Eigentums (602), die in den Speichermedia gespeichert werden, wobei jedes der Dokumente in der Sammlung mehrfache Abschnitte hat;
einen Direktor (660) zum Kompilieren und Indexieren der Dokumentensammlung;
einen Dokumentenmanager (662) in Kommunikation mit dem Direktor, wobei der Dokumentenmanager jeden Abschnitt eines jeden Dokuments in der Sammlung zu identifizieren hat;
einen Profilmanager (664) in Kommunikation mit dem Dokumentenmanager, wobei der Profilmanager dazu konfiguriert ist, ein Suchprofil für die Dokumentensammlung zu organisieren, worin das Suchprofil eine Auswahl von mindestens einem der identifizierten Abschnitte eines jeden Dokuments in der kompilierten Sammlung einschließt;
wobei der Profilmanager dazu konfiguriert ist, einem jeden der identifizierten und ausgewählten Abschnitte mit dem organisierten Suchprofil ein Gewicht zuzuweisen, und zur Abfragezeit ein Abfragemanager zum Vorlegen einer Abfrage an die Dokumentensammlung, wobei die Abfrage eine Auswahl von mindestens einem Suchprofil einschließt und einen Vergleich von Abfragedaten mit Daten in jedem der Dokumentenabschnitte des ausgewählten Profils in der Sammlung mit einem zugewiesenen Gewicht;
und
eine visuelle Anzeige, konfiguriert zum Anzeigen einer Kompilation von relevanten Dokumenten, erzeugt aus der Abfragevorlegung und vom Abfragemanager zurückgeleitet, wobei jedes Dokument eine Übereinstimmung der Abfrage mit Daten in mindestens einem identifizierten Profilabschnitt mit einem zugewiesenen Gewicht hat;
**dadurch gekennzeichnet, dass** der Profilmanager dazu konfiguriert ist, ein oder mehrere zugewiesene Gewichte durch Addieren oder Subtrahieren von einem oder mehreren sekundären Gewichten von jedem zugewiesenen Gewicht auf der Basis einer Anzahl von übereinstimmenden Strings in ausgewählten Abschnitten zu modifizieren, die einen Schwellenwert übersteigt.

9. System nach Anspruch 8, außerdem umfassend, dass der Profilmanager mindestens einen identifizierten Abschnitt in mindestens einem Suchprofil in mindestens zwei Unterabschnitte unterteilt und ein sekundäres Gewicht mindestens einem der zwei Unterabschnitte zuweist.

10. System nach Anspruch 8, außerdem umfassend, dass der Abfragemanager einen Score für jedes Dokument in der Kompilation von relevanten Dokumenten berechnet, worin der Score eine Aggregation eines Produkts der Anzahl von Übereinstimmungen in jedem Profilabschnitt des ausgewählten Profils mit dem für diesen Abschnitt zugewiesenen Gewicht ist.

11. System nach Anspruch 8, außerdem umfassend, dass der Profilmanager dynamische Modifikation des an mindestens einen identifizierten Abschnitt eines jeden Dokuments geistigen Eigentums in der Sammlung zugewiesenen Gewichts unterstützt.

12. System nach Anspruch 11, außerdem eine graphische Benutzeroberfläche umfassend als Schicht zum Modifizieren der zugewiesenen Gewichte, worin die graphische Benutzeroberfläche ein Feld für jeden identifizierten Abschnitt eines jeden Dokuments geistigen Eigentums und eine entsprechende Bildlaufleiste für jeden identifizierten Abschnitt einschließt.

13. System nach Anspruch 8, worin die zugewiesenen Gewichte statisch sind.

14. System nach Anspruch 8, außerdem vorprogrammierte Gewichtsprofile für die identifizierten Abschnitte der Sammlung von Patentdokumenten auf der Basis eines Umfangs der Abfrage umfassend, die der Dokumentensammlung vorzulegen ist.

15. Artikel, konfiguriert zum Durchsuchen einer Sammlung elektronischer Dokumente auf einem Computerspeicher, wobei der Artikel einen computerlesbaren Träger umfasst, der Computerprogrammanweisungen einschließt, die durch einen Computer ausführbar sind, um den Computer zu veranlassen, ein Verfahren nach einem der Ansprüche 1 bis 7 auszuführen.

## Revendications

1. Procédé mis en oeuvre par un ordinateur pour faire une recherche dans un ensemble de documents électroniques, comprenant les étapes consistant à :

   compiler et indexer (102) un ensemble de documents de propriété intellectuelle, chacun des documents dudit ensemble présentant plusieurs sections ;
   identifier (104) chacune des sections de chaque document de l'ensemble ;
   organiser un profil de recherche pour l'ensemble de documents, le profil de recherche comprenant une sélection d'au moins une parmi les sections identifiées de chaque document de l'ensemble compilé ;
   au sein du profil de recherche organisé, attribuer une pondération (116) à chacune des sections identifiées et sélectionnées ;
   à un moment d'interrogation, soumettre une interrogation (506) à l'ensemble de documents de propriété intellectuelle, ce qui comprend les étapes consistant à sélectionner au moins un profil de recherche et à comparer des données d'interrogation avec des données dans chacune des sections de document du profil sélectionné dans l'ensemble avec une pondération attribuée,
   générer une compilation de documents pertinents générés à partir de la dite soumission d'interrogation, ce qui comprend une mise en correspondance de l'interrogation soumise avec des données dans au moins une section de profil identifiée présentant une pondération attribuée,
   **caractérisé par** l'étape consistant à
   modifier une ou plusieurs pondération(s) en ajoutant ou en soustrayant une ou plusieurs pondération(s) secondaire(s) à chaque pondération attribuée en se basant sur une quantité de chaînes de correspondance dans des sections sélectionnées qui dépasse une valeur de seuil.

2. Procédé selon la revendication 1, comprenant en outre les étapes consistant à subdiviser au moins une section identifiée dans un profil de recherche en au moins deux sous-sections et attribuer une pondération secondaire à au moins une des deux sous-sections.

3. Procédé selon la revendication 1, comprenant en outre une étape consistant à calculer un score pour chaque document de la compilation de documents pertinents, le score étant une agrégation d'un produit de la quantité de correspondances dans chaque section de profil du profil sélectionné avec la pondération attribuée pour ladite section.

4. Procédé selon la revendication 1, comprenant en outre une étape consistant à modifier de manière dynamique la pondération attribuée à au moins une section identifiée de chaque document de propriété intellectuelle de l'ensemble.

5. Procédé selon la revendication 4, comprenant en outre une étape consistant à utiliser une interface utilisateur graphique en tant que couche pour modifier les pondérations attribuées, l'interface utilisateur graphique comprenant un champ pour chaque section identifiée de chaque document de propriété intellectuelle, une barre de défilement correspondante pour chaque section identifiée.

6. Procédé selon la revendication 1, dans lequel les pondérations attribuées sont statiques.

7. Procédé selon la revendication 1, comprenant en outre une étape consistant à préprogrammer des profils de pondération pour les sections identifiées de l'ensemble de documents de brevet en se basant sur un périmètre de l'interrogation à soumettre à l'ensemble de documents.

8. Système comprenant :

un processeur en communication avec des supports de mémoire et de stockage ;
un ensemble de documents de propriété intellectuelle (602) conservés sur le support de stockage, chacun des documents dudit ensemble présentant plusieurs sections ;
un logiciel directeur (660) pour compiler et indexer l'ensemble de documents ;
un gestionnaire de documents (662) en communication avec le logiciel directeur, le gestionnaire de documents étant chargé d'identifier chaque section de chaque document de l'ensemble ;
un gestionnaire de profils (664) en communication avec le gestionnaire de documents, le gestionnaire de profils étant configuré pour organiser un profil de recherche pour l'ensemble de documents, le profil de recherche comprenant une sélection d'au moins une parmi les sections identifiées de chaque document de l'ensemble compilé ;
le gestionnaire de profils étant configuré pour attribuer une pondération à chacune des sections identifiées et sélectionnées avec le profil de recherche organisé, et, à un moment d'interrogation, un gestionnaire d'interrogation étant chargé de soumettre une interrogation à l'ensemble de documents, l'interrogation devant comprendre une sélection d'au moins un profil de recherche et une comparaison de données d'interrogation avec des données de chacune des sections de document du profil sélectionné dans l'ensemble présentant une pondération attribuée;
et
un affichage visuel configuré pour afficher une compilation de documents pertinents générée à partir de ladite soumission d'interrogation et renvoyée par le gestionnaire d'interrogation, chaque document présentant une correspondance de l'interrogation avec des données dans au moins une section de profil identifiée présentant une pondération attribuée ;
**caractérisé en ce que** le gestionnaire de profil est configuré pour modifier une ou plusieurs pondération(s) attribuée(s) en ajoutant ou soustrayant une ou plusieurs pondération(s) secondaire(s) à chaque pondération attribuée en se basant sur une quantité de chaînes de correspondance dans des sections sélectionnées qui dépasse une valeur de seuil.

9. Système selon la revendication 8, comprenant en outre les étapes dans lesquelles le gestionnaire de profil subdivise au moins une section identifiée dans au moins un profil de recherche en au moins deux sous-sections, et attribue une pondération secondaire à au moins une des deux sous-sections.

10. Système selon la revendication 8, comprenant en outre une étape dans laquelle le gestionnaire d'interrogation calcule un score pour chaque document de la compilation de documents pertinents, le score étant une agrégation d'un produit de la quantité de correspondances dans chaque section de profil du profil sélectionné avec la pondération attribuée pour ladite section.

**11.** Système selon la revendication 8, comprenant en outre une étape dans laquelle le gestionnaire de profil favorise une modification dynamique de la pondération attribuée à au moins une section identifiée de chaque document de propriété intellectuelle de l'ensemble.

**12.** Système selon la revendication 11, comprenant en outre une interface utilisateur graphique en tant que couche pour modifier les pondérations attribuées, l'interface utilisateur graphique comprenant un champ pour chaque section identifiée de chaque document de propriété intellectuelle et une barre de défilement correspondante pour chaque section identifiée.

**13.** Système selon la revendication 8, dans lequel les pondérations attribuées sont statiques.

**14.** Système selon la revendication 8, comprenant en outre des profils de pondération préprogrammés pour les sections identifiées de l'ensemble de documents de brevet en se basant sur un périmètre de l'interrogation à soumettre à l'ensemble de documents.

**15.** Article configuré pour faire une recherche dans un ensemble de documents électroniques sur une mémoire d'ordinateur, l'article comprenant un support pouvant être lu par un ordinateur et contenant des instructions de programme informatique pouvant être exécutées par un ordinateur de manière à amener l'ordinateur à mettre en oeuvre un procédé selon l'une quelconque des revendications 1 à 7.

*100*

*104*
IDENTIFY EACH SECTION OF THE COLLECTION

*102*
COMPILE AND INDEX COLLECTION

*106*
$N_{TOTAL}$ = NUMBER OF IDENTIFIED SECTIONS

*108*
X = 1

*110*
N = 1

*112*
INCLUDE $SECTION_N$ IN $PROFILE_X$?

NO

YES

*114*
JOIN $SECTION_N$ TO $PROFILE_X$

*116*
ASSIGN PRIMARY WEIGHT TO $SECTION_N$

*118*
N = N+1

*120*
N > $N_{TOTAL}$?

NO

YES

*122*
$PROFILE_X$ COMPLETED

*124*
MORE PROFILES?

YES

*126*
X = X+1

NO

*128*
$X_{TOTAL}$ = X

*FIG. 1*

*FIG. 2*

*300*

302 — $X_{TOTAL}$ = NUMBER OF PROFILES

304 — X = 1

306 — $Y_{TOTAL}$ = NUMBER OF SECTIONS IN PROFILE X WITH WEIGHT ASSIGNMENT

308 — Y = 1

310 — ADD SECONDARY WEIGHT TO PROFILE$_X$ SECTION$_Y$?

312 — DIVIDE PROFILE$_X$ SECTION$_Y$ INTO MULTIPLE SUBSECTIONS

314 — $Z_{TOTAL}$ = NUMBER OF SUBSECTIONS

316 — Z = 1

318 — ASSIGN SECONDARY WEIGHT TO PROFILE$_X$ SECTION$_Y$ SUBSECTION$_Z$

320 — Z = Z + 1

322 — Z > $Z_{TOTAL}$?   NO   YES

324 — Y = Y + 1

326 — Y > $Y_{TOTAL}$?   NO   YES

328 — X = X + 1

330 — X > $X_{TOTAL}$?   NO   YES

END

*FIG. 3*

17

GUI

FIG. 4

FIG. 5

_600_

_602_

SYSTEM

_604_

PROCESSOR

BUS

_608_

_606_

MEMORY

DIRECTOR

_660_

_664_

PROFILE
MANAGER

DOCUMENT
MANAGER

_662_

_666_

QUERY
MANAGER

_640_

_642_

DOCUMENT
COLLECTION

_646_

COMPILATION

_650_

VISUAL
DISPLAY

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2369698 A1